# FASCICULE DE BREVET EUROPEEN

(11) **EP 3 646 526 B1**
(45) Date de publication et mention de la délivrance du brevet: **15.12.2021**
(21) Numéro de dépôt: 18748993.5
(22) Date de dépôt: 25.06.2018
(51) Int. Cl.: H04L 9/32, H04L 9/08

(54) **PROCÉDÉ DE RÉCEPTION ET DE DÉCHIFFREMENT D'UN CRYPTOGRAMME D'UN MOT DE CONTRÔLE**
VERFAHREN ZUM EMPFANGEN UND ENTSCHLÜSSELN EINES KRYPTOGRAMMS EINES STEUERWORTS
METHOD FOR RECEIVING AND DECRYPTING A CRYPTOGRAM OF A CONTROL WORD

(30) Priorité: 28.06.2017 FR 1755975
(43) Date de publication de la demande: 06.05.2020
(73) Titulaire: Viaccess, 92057 Paris La Défense Cedex (FR)
(72) Inventeur: BARAU, Emmanuel, 78000 Versailles (FR); CHIEZE, Quentin, 92800 Puteaux (FR)
(74) Mandataire: Colombo, Michel
(86) Numéro de dépôt international: PCT/FR2018/051530
(87) Numéro de publication internationale: WO 2019/002736

(56) Documents cités:
- WO-A1-01/82525
- WO-A1-2012/089542
- US-A1- 2013 132 725
- US-A1- 2015 269 367
- US-B2- 8 885 816

## Description

L'invention concerne un procédé de réception et de déchiffrement d'un cryptogramme d'un mot de contrôle utilisable pour désembrouiller une cryptopériode d'un contenu multimédia. L'invention concerne aussi un procédé de génération et d'émission d'un cryptogramme d'un mot de contrôle utilisable pour désembrouiller une cryptopériode d'un contenu multimédia. L'invention a également pour objet un support d'enregistrement d'informations, une tête de réseau et un processeur de sécurité pour la mise en œuvre de ces procédés.

Par contenu multimédia on désigne un contenu audio et/ou visuel destiné à être restitué sous une forme directement perceptible et compréhensible par un être humain. Typiquement, un contenu multimédia correspond à une succession d'images formant un film, une émission de télévision ou de la publicité. Un contenu multimédia peut également être un contenu interactif tel qu'un jeu.

Pour sécuriser et soumettre la visualisation des contenus multimédias à certaines conditions, dites conditions d'accès, comme la souscription d'un abonnement payant, ou un achat à la séance, par exemple, les contenus multimédias sont fournis sous forme embrouillée et non pas en clair. Plus précisément, par exemple, chaque contenu multimédia est divisé en une succession de segments de durée de jeu prédéterminée dite « cryptopériode », segments eux-mêmes appelés habituellement « cryptopériodes » dans la suite de ce document. Pendant toute la durée d'une cryptopériode, les conditions d'accès au contenu multimédia embrouillé demeurent inchangées. En particulier, pendant toute la durée d'une cryptopériode, le contenu multimédia est embrouillé avec une même clé cryptographique, dite mot de contrôle. Généralement, le mot de contrôle varie d'une cryptopériode à l'autre. De plus, le mot de contrôle est généralement spécifique à un contenu multimédia, et aléatoirement ou pseudo aléatoirement tiré.

Ici, les termes «embrouiller» et « désembrouiller » et «chiffrer» et « déchiffrer », sont respectivement considérés comme des synonymes.

Le contenu multimédia en clair correspond au contenu multimédia avant que celui-ci ne soit embrouillé. Celui-ci peut être rendu compréhensible par un être humain directement, c'est-à-dire sans avoir recours à des opérations de désembrouillage, et donc sans que ce désembrouillage, ni donc la visualisation du contenu multimédia, soit soumise à des conditions d'accès.

Les mots de contrôle nécessaires pour désembrouiller les contenus multimédias sont transmis de manière synchronisée avec les contenus multimédias. Par exemple, les mots de contrôle nécessaires pour désembrouiller la t-ième cryptopériode sont reçus par chaque terminal pendant la (t-1)-ième cryptopériode. Pour cela, par exemple, les mots de contrôle sont multiplexés avec le contenu multimédia embrouillé.

Pour sécuriser la transmission des mots de contrôle, ceux-ci sont transmis aux terminaux sous forme de cryptogrammes contenu dans des messages de contrôle d'accès connu sous le terme de « message de contrôle des titres d'accès », ou « message ECM » (Entitlement Control Message). Pour améliorer la sécurité de cette transmission, les messages ECM peuvent en outre contenir une donnée supplémentaire, telle qu'une redondance cryptographique, qui permette de confirmer ou infirmer l'intégrité du cryptogramme du mot de contrôle. De tels procédés sont par exemple décrit dans WO2012/089542A1 et US2013/132725A1. WO 2012/089542 A1 concerne un procédé de génération de messages ECM et un procédé de réception de messages ECM dont chaque cryptopériode CPt est embrouillée à l'aide d'un mot de contrôle CWt respectif.

US 2013/132725 A1 concerne un procédé de protection de la transmission d'un contenu multimédia ou d'un mot de contrôle entre un processeur de sécurité et un terminal. L'invention a également pour objet un procédé de décryptage d'un contenu multimédia ou d'un mot de contrôle ainsi qu'un support d'enregistrement et un terminal pour mettre en œuvre ce procédé de protection.

De l'état de la technique est également connu de US2015/269367A1 et WO01/82525A1.

On désigne ici par cryptogramme du mot de contrôle une information permettant d'obtenir le mot de contrôle, mais insuffisante à elle seule pour ce faire. Ainsi, si la transmission du mot de contrôle est interceptée, la seule connaissance du cryptogramme du mot de contrôle ne permet pas de retrouver le mot de contrôle permettant de désembrouiller le contenu multimédia. Pour retrouver le mot de contrôle, le cryptogramme du mot de contrôle doit être combiné avec une information secrète. Par exemple, le cryptogramme du mot de contrôle est obtenu en chiffrant le mot de contrôle avec une clé cryptographique appelée « clé d'exploitation ». Dans ce cas, l'information secrète est la clé d'exploitation permettant de déchiffrer ce cryptogramme. Le cryptogramme du mot de contrôle peut aussi être une référence à un mot de contrôle stocké dans une table contenant une multitude de mots de contrôle possibles. Dans ce cas, l'information secrète est la table associant à chaque référence un mot de contrôle.

L'information secrète doit être préservée en lieu sûr. Pour cela, il a déjà été proposé de stocker l'information secrète dans des processeurs de sécurité tels que des cartes à puce directement connectées à chacun des terminaux.

Dans ce contexte, des attaques ont été développées pour permettre à des utilisateurs de désembrouiller des contenus multimédias pour lesquels ils n'ont pas acquis licitement des droits d'accès.

L'une de ces attaques consiste à extraire d'un processeur de sécurité les informations secrètes par des techniques de cryptanalyse connues sous les termes de « attaque par canaux auxiliaires » ou «side-channel attack » en anglais. Par exemple, une fois que la clé d'exploitation kₑ et la fonction de déchiffrement f_{de} sont connues, un pirate informatique peut facilement développer un terminal dit « pirate » capable de désembrouiller illicitement le contenu multimédia. Typiquement, un tel terminal pirate reçoit les messages ECM diffusés par une tête de réseau, en extrait les cryptogrammes des mots de contrôle puis déchiffre ces cryptogrammes à l'aide de la fonction f_{de} et de la clé kₑ. Il obtient ainsi les mots de contrôle en clair qui permettent de désembrouiller les cryptopériodes du contenu multimédia embrouillé.

Généralement, de tels terminaux pirates se contentent de faire le strict nécessaire pour déchiffrer les cryptogrammes des mots de contrôle. Par exemple, contrairement à des terminaux licites :
- ils ne comparent pas les conditions d'accès contenues dans les messages ECM à des titres d'accès préenregistrés dans le terminal afin d'autoriser et, en alternance, d'interdire l'accès au contenu multimédia, et
- ils ne vérifient pas l'intégrité des cryptogrammes des mots de contrôle contenus dans les messages ECM.

L'invention vise à proposer un procédé de réception et de déchiffrement d'un cryptogramme d'un mot de contrôle plus robuste vis-à-vis de ce type d'attaque. Elle a donc pour objet un tel procédé de réception conforme à la revendication 1.

Les modes de réalisation de ce procédé de réception et de déchiffrement peuvent comporter une ou plusieurs des caractéristiques des revendications dépendantes de procédé de réception.

L'invention a également pour objet un procédé de génération et d'émission d'un cryptogramme d'un mot de contrôle utilisable pour désembrouiller une cryptopériode d'un contenu multimédia, le cryptogramme généré et émis étant apte à être reçu et déchiffré à l'aide du procédé revendiqué de réception et de déchiffrement.

Les modes de réalisation de ce procédé de génération et d'émission peuvent comporter la caractéristique des revendications dépendantes de procédé de générationₜ.

L'invention a également pour objet un support d'enregistrement d'informations comportant des instructions pour la mise en œuvre d'un des procédés revendiqués, lorsque ces instructions sont exécutées par un microprocesseur électronique.

L'invention a aussi pour objet une tête de réseau pour la mise en œuvre du procédé revendiqué de génération et d'émission.

Enfin, l'invention a également pour objet un processeur de sécurité pour la mise en œuvre du procédé revendiqué de réception et de déchiffrement.

L'invention sera mieux comprise à la lecture de la description qui va suivre, donnée uniquement à titre d'exemple non limitatif et faite en se référant aux dessins sur lesquels :
- la figure 1 est une illustration schématique d'un système d'émission et de réception de contenus multimédias embrouillés,
- la figure 2 est une illustration schématique et partielle de la structure d'un message ECM utilisé dans le système de la figure 1,
- la figure 3 est un organigramme d'un procédé de diffusion et d'embrouillage d'un contenu multimédia mis en œuvre dans le système de la figure 1,
- la figure 4 est un organigramme d'un procédé de réception et de désembrouillage d'un contenu multimédia embrouillé mis en œuvre dans le système de la figure 1,
- la figure 5 est un organigramme d'un mode de réalisation alternatif du procédé de la figure 3, et
- la figure 6 est un organigramme partiel d'un mode de réalisation alternatif du procédé de la figure 4.

Dans ces figures, les mêmes références sont utilisées pour désigner les mêmes éléments. Dans la suite de cette description, les caractéristiques et fonctions bien connues de l'homme du métier ne sont pas décrites en détail. De plus, la terminologie utilisée est celle des systèmes d'accès conditionnels à des contenus multimédias. Pour plus d'informations sur cette terminologie, le lecteur peut se reporter au document suivant : « Functional Model of Conditional Access System », EBU Review, Technical European Broadcasting Union, Brussels, BE, n° 266, 21 décembre 1995.

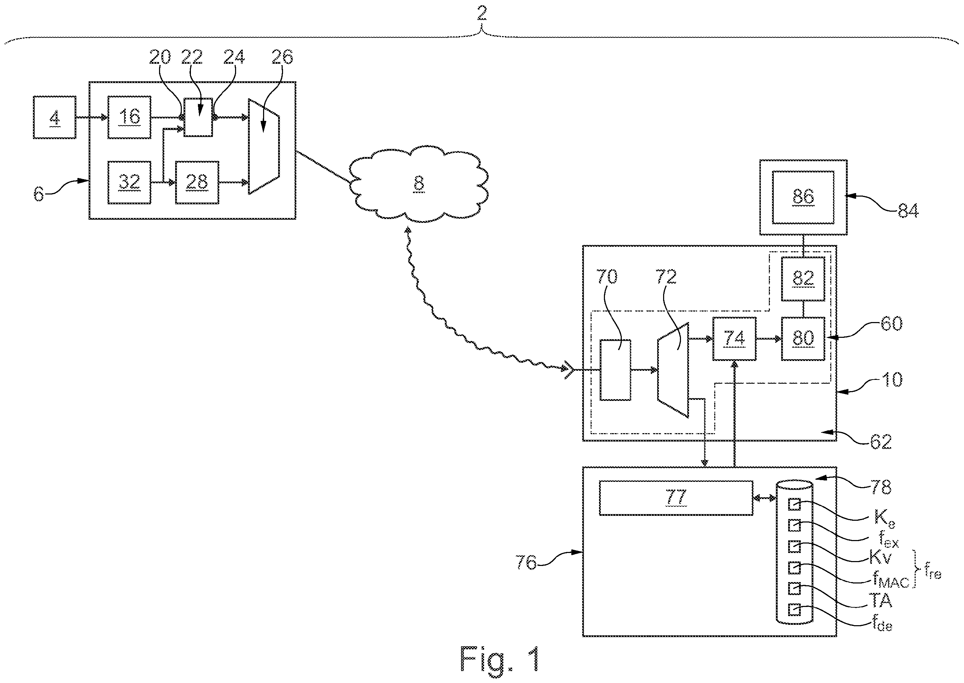

La figure 1 représente un système 2 d'émission et de réception de contenus multimédias embrouillés. Les contenus multimédias émis sont typiquement des contenus multimédias linéarisés. Par exemple, un contenu multimédia correspond à une séquence d'un programme audiovisuel tel qu'une émission de télévision ou un film.

Les contenus multimédias en clair sont générés par une ou plusieurs sources 4 et transmis à une tête 6 de réseau. La tête 6 diffuse les contenus multimédias vers une multitude de terminaux de réception à travers un réseau 8 de transmission d'informations. Les contenus multimédias diffusés sont synchronisés temporellement les uns avec les autres pour, par exemple, respecter une grille préétablie de programmes.

Le réseau 8 est typiquement un réseau grande distance de transmission d'informations tel que le réseau Internet ou un réseau satellitaire ou tout autre réseau de diffusion tel que celui utilisé pour la transmission de la télévision numérique terrestre (TNT).

Pour simplifier la figure 1, un seul terminal 10 de réception est représenté.

La tête 6 comprend un encodeur 16 qui compresse le contenu multimédia qu'il reçoit. L'encodeur 16 traite des contenus multimédias numériques. Par exemple, cet encodeur fonctionne conformément à la norme MPEG2 (Moving Picture Experts Group - 2) ou la norme UIT-T H264.

Les contenus multimédias compressés sont dirigés vers une entrée 20 d'un embrouilleur 22. L'embrouilleur 22 embrouille chaque contenu multimédia compressé pour conditionner sa visualisation par un terminal de réception, à certaines conditions, dites conditions d'accès, telles que l'achat d'un titre d'accès par un utilisateur du terminal de réception. Les contenus multimédias embrouillés sont restitués sur une sortie 24 raccordée à l'entrée d'un multiplexeur 26.

L'embrouilleur 22 embrouille chaque cryptopériode CPₜ du contenu multimédia compressé à l'aide d'un mot de contrôle CWₜ qui lui est fourni par un générateur 32 de mots de contrôle. Le générateur 32 fournit également chaque mot de contrôle CWₜ à un système 28 d'accès conditionnel. Le système 28 est plus connu sous l'acronyme CAS (Conditional Access System). Il se présente typiquement sous la forme d'une unité électronique de traitement comportant un microprocesseur programmable et une mémoire. L'indice t est un numéro d'ordre identifiant la cryptopériode CPₜ. Ici, l'indice t identifie la position temporelle de cette cryptopériode CPₜ par rapport aux autres cryptopériodes du contenu multimédia. La notation CWₜ désigne le mot de contrôle utilisé pour embrouiller la cryptopériode CPₜ.

Typiquement, cet embrouillage est conforme à une norme telle que la norme DVB-CSA (Digital Video Broadcasting - Common Scrambling Algorithm), ISMA Cryp (Internet Streaming Media Alliance enCryption and Authentication), SRTP (Secure Real-time Transport Protocol), AES (Advanced Encryption Standard), ou à tout autre algorithme de chiffrement.

Le système 28 génère des messages ECM. Ces messages ECM permettent de communiquer aux terminaux de réception des cryptogrammes des mots de contrôles utilisables pour désembrouiller le contenu multimédia. Ces messages ECM et le contenu multimédia embrouillé sont multiplexés par le multiplexeur 26 avant d'être émis sur le réseau 8.

Typiquement, le système 28 insère notamment dans chaque message ECMₜ :
- une plage de bits PBₜ à partir de laquelle il est possible de retrouver un cryptogramme CW*ₜdu mot de contrôle CWₜ,
- des conditions d'accès CAₜ destinées à être comparées à des titres d'accès acquis par l'utilisateur et enregistrés dans le terminal 10, et
- une redondance cryptographique MACₜ permettant de vérifier l'intégrité d'au moins une partie du message contenant le cryptogramme CW*ₜ et les conditions d'accès CAₜ.

La notation ECMₜ désigne le message ECM contenant le cryptogramme CW*ₜ. La notation CW*ₜ désigne le cryptogramme du mot de contrôle CWₜ. Les notations CAₜ et MACₜ désignent, respectivement, les conditions d'accès et la redondance cryptographique contenues dans le message ECMₜ.

Ici, la redondance cryptographique est un code d'authentification de message connu sous l'acronyme MAC (« Message Authentification Code »). Une telle redondance cryptographique, en plus de permettre de vérifier l'intégrité du message ECM, permet aussi de vérifier l'authenticité du message ECM.

Chaque cryptogramme CW*ₜ est codé sur Nₚ bits. Typiquement, Nₚ est supérieur à 50 ou 100 et, généralement, inférieure à 300 ou 500. Par déchiffrement, le cryptogramme CW*ₜ permet d'obtenir le mot de contrôle CWₜ.

A titre d'illustration, tous les terminaux du système 2 sont identiques et seul le terminal 10 est décrit plus en détail.

Le terminal 10 comporte au moins une ligne 60 de désembrouillage permettant le désembrouillage d'un canal pour l'afficher sur un afficheur 84. La ligne 60 comprend un récepteur 70 de contenus multimédias diffusés. Ce récepteur 70 est raccordé à l'entrée d'un démultiplexeur 72. Le démultiplexeur 72 transmet d'un côté le contenu multimédia embrouillé à un désembrouilleur 74 et d'un autre côté les messages ECMₜ et messages de gestion des titres d'accès, ou EMM (Entitlement Management Message) à un processeur 76 de sécurité.

Le processeur 76 déchiffre le cryptogramme CW*ₜ pour obtenir le mot de contrôle CWₜ, qu'il transmet ensuite au désembrouilleur 74.

A cet effet, le processeur 76 contient les informations confidentielles telles que des clés cryptographiques. Pour préserver la confidentialité de ces informations, il est conçu pour être le plus robuste possible vis-à-vis des tentatives d'attaques menées par des pirates informatiques. Il est donc plus robuste vis-à-vis de ces attaques que les autres composants du terminal 10. Par exemple, le processeur 76 est une carte à puce.

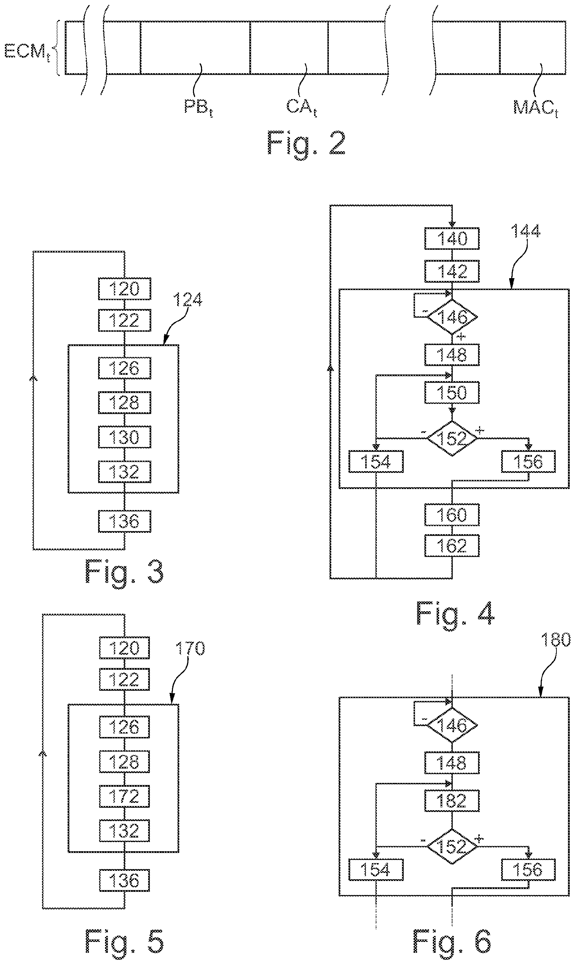

Typiquement, le processeur 76 comporte un microprocesseur 77 électronique programmable apte à exécuter des instructions enregistrées dans une mémoire. A cet effet, le processeur 76 comporte aussi une mémoire 78 contenant les instructions nécessaires pour l'exécution du procédé de la figure 4 ou 6.

La mémoire 78 contient également :
- une clé Kₑ d'exploitation permettant de déchiffrer les cryptogrammes des mots de contrôle,
- un code exécutable secret d'une fonction fₑₓ d'extraction,
- un code exécutable d'une fonction f_{MAC},
- une clé Kᵥ,
- un code exécutable d'une fonction f_{de} de déchiffrement, et
- des titres d'accès TA.

La fonction fₑₓ permet, lorsqu'elle est exécutée par le microprocesseur 77, de générer, à partir de la plage PBₜ du message ECMₜ reçu, une variante parmi une liste de N variantes différentes du cryptogramme CW*ₜ, où N est un nombre entier strictement supérieur à un et, de préférence, supérieur à trois. Généralement, N est aussi inférieur ou égal à huit. Cette liste contient le cryptogramme CW*ₜ et N-1 leurres. Un leurre est une valeur qui est codée sur le même nombre de bits que le cryptogramme CW*ₜ mais qui ne permet pas de désembrouiller la cryptopériode CPₜ de manière à obtenir cette cryptopériode en clair. A cet effet, chaque leurre du cryptogramme CW*ₜ est différent du cryptogramme CW*ₜ. Il n'est pas possible à partir du seul examen de la structure des différentes variantes de la liste de faire la distinction entre un leurre et le cryptogramme CW*ₜ.

La combinaison de la clé Kᵥ et de la fonction f_{MAC} forme ici une fonction secrète fᵥₑ de vérification de l'intégrité du message ECMₜ. La fonction fᵥₑ permet de vérifier l'intégrité du cryptogramme CW*ₜ à partir de la redondance cryptographique MACₜ. Cette fonction retourne soit une confirmation de l'intégrité du cryptogramme CW*ₜ soit, au contraire, une infirmation de l'intégrité de ce cryptogramme CW*ₜ.

La fonction f_{de} permet de déchiffrer le cryptogramme CW*ₜ à l'aide de la clé Kₑ pour obtenir le mot de contrôle en clair CWₜ.

Les titres d'accès TA sont comparés aux conditions d'accès CAₜ reçues pour autoriser et, en alternance, interdire le déchiffrement du cryptogramme CW*ₜ.

Enfin, le désembrouilleur 74 désembrouille le contenu multimédia embrouillé à partir du mot de contrôle transmis par le processeur 76. Le contenu multimédia désembrouillé est transmis à un décodeur 80 qui le décode. Le contenu multimédia décompressé ou décodé est transmis à une carte graphique 82 qui pilote l'affichage en clair de ce contenu multimédia sur l'afficheur 84 équipé d'un écran 86.

La figure 2 représente schématiquement la structure du message ECMₜ. Les symboles PBₜ, CAₜ et MACₜ sur cette figure correspondent à ceux déjà définis dans ce texte. Les lignes verticales ondulées indiquent que des parties de ce message ECMₜ n'ont pas été représentées.

La figure 3 représente un premier procédé d'embrouillage des cryptopériodes du contenu multimédia susceptible d'être mis en œuvre dans le système 2. Pour chaque cryptopériode CPₜ du contenu multimédia, les étapes suivantes sont réitérées.

Une étape 120, lors de laquelle le générateur 32 génère le mot de contrôle CWₜ, puis le transmet à l'embrouilleur 22 et au système 28.

Une étape 122 lors de laquelle l'embrouilleur 22 embrouille la cryptopériode CPₜ du contenu multimédia à l'aide du mot de contrôle CWₜ.

Une étape 124 lors de laquelle le système 28 génère le message ECMₜ. À cet effet, l'étape 124 comporte notamment les opérations suivantes :
- une opération 126 lors de laquelle le système 28 chiffre le mot de contrôle CWₜ, à l'aide de la clé Kₑ et d'une fonction f_{ch} de chiffrement, pour obtenir le cryptogramme CW*ₜ,
- une opération 128 lors de laquelle le système 28 construit la redondance cryptographique MACₜ.

Ici, la redondance cryptographique MACₜ est par exemple construite en chiffrant le cryptogramme CW*ₜ et les conditions d'accès CAₜ à l'aide de la clé secrète Kᵥ et en utilisant la fonction de chiffrement F_{MAC}. La clé Kᵥ est utilisée seulement par la tête de réseau 6 ou seulement par un groupe restreint de têtes de réseau d'un même opérateur. Cette clé Kᵥ est uniquement communiquée aux terminaux autorisés à désembrouiller le contenu multimédia.

Lors d'une opération 130, le système 28 construit la plage de bits PBₜ. La plage PBₜ est construite de manière à ce qu'il soit possible de générer, à partir de cette plage PBₜ et en exécutant la fonction fₑₓ, la liste des N variantes du cryptogramme CW*ₜ.

Dans ce premier mode de réalisation, à cet effet, le système 28 tire de façon aléatoire ou pseudo-aléatoire N-1 nombres compris chacun entre 0 et 2^{Np}. Chacun de ces nombres est différent du cryptogramme CW*ₜ et constitue un leurre. Ensuite, ces N-1 leurres et le cryptogramme CW*ₜ sont agencées les uns après les autres dans un ordre aléatoire ou pseudo-aléatoire pour former la plage de bits PBₜ. Ainsi, à chaque fois qu'un message ECMₜ est généré, le cryptogramme CW*ₜ ne se trouve pas systématiquement au même endroit à l'intérieur de la plage PBₜ. Au contraire, la probabilité que le cryptogramme CW*ₜ occupe une position donnée à l'intérieur de la plage PBₜ est la même quelle que soit la position donnée considérée.

Lors d'une opération 132, le système 28 génère le message ECMₜ contenant la plage PBₜ construite, les conditions d'accès CAₜ et la redondance cryptographique MACₜ. Ce message ECM ne contient aucune information permettant d'identifier dans la plage PBₜ la position à laquelle se trouve le cryptogramme CW*ₜ.

À l'issue de l'étape 124, lors d'une étape 136, le message ECMₜ généré est multipléxé avec le contenu multimédia embrouillé puis transmis sur le réseau 8. Plus précisément, généralement, le message ECMₜ est émis plusieurs fois dont au moins une fois vers la fin de la cryptopériodre CPₜ-₁ et une fois au début de la cryptopériode CPₜ. Le multiplexage des messages ECM avec les cryptopériodes embrouillées permet de synchroniser temporellement les messages ECM par rapport aux cryptopériodes.

La figure 4 représente le procédé de désembrouillage par un terminal du contenu multimédia embrouillé et diffusé en mettant en œuvre le procédé de la figure 3. Ce procédé est décrit dans le cas particulier du terminal 10 et de la cryptopériode CPₜ.

Lors d'une étape 140, le récepteur 70 reçoit le message ECMₜ et la cryptopériode CPₜ embrouillée du contenu multimédia.

Lors d'une étape 142, le démultiplexeur 72 transmet le message ECMₜ reçu au processeur 76. En parallèle ou, plus généralement et de préférence, après, le démultiplexeur 72 transmet la cryptopériode au désembrouilleur 74.

Lors d'une étape 144, le processeur 76 reçoit le message ECMₜ et le traite pour obtenir, si cela est autorisé, le mot de contrôle CWₜ en clair.

Pour cela, lors d'une opération 146, le microprocesseur 77 compare les conditions d'accès CAₜ aux titres d'accès TA enregistrés dans la mémoire 78. Si les conditions CAₜ correspondent aux titres d'accès TA, alors le traitement du message ECMₜ se poursuit par une opération 148. Dans le cas contraire, le traitement du message ECMₜ est interrompu.

Lors de l'opération 148, le microprocesseur 77 extrait du message ECMₜ la plage PBₜ et la redondance cryptographique MACₜ.

Lors d'une opération 150, le microprocesseur 77 obtient une variante du cryptogramme CW*ₜ à partir de la plage PBₜ. Pour cela, le microprocesseur 77 exécute la fonction fₑₓ. Ici, à chaque fois que la fonction fₑₓ est exécutée, elle génère une nouvelle variante du cryptogramme CW*ₜ, différente de la précédente, à partir de la plage PBₜ. Plus précisément, elle génère dans l'ordre, une première variante lors de la première exécution, puis une deuxième variante lors de la deuxième exécution et ainsi de suite jusqu'à la N-ième variante lors de la N-ième exécution de la fonction fₑₓ. Cette fonction fₑₓ est donc apte à construire la liste des N variantes codées par la plage PBₜ.

Dans ce mode de réalisation, la fonction fₑₓ utilise un indice p qui repère la position d'une variante dans la plage PBₜ. L'indice p est ici un nombre entier qui varie de 1 à N, où la valeur 1 désigne la première position et donc la première variante. A l'inverse, la valeur N désigne la dernière position et donc la dernière variante. Initialement, l'indice p est égal à 1.

Lors de l'exécution de la fonction fₑₓ, le microprocesseur 77 sélectionne la variante située à la position repérée par la valeur actuelle de l'indice p. Ensuite, l'indice p est incrémenté, par exemple de un, après chaque exécution de la fonction fₑₓ jusqu'à atteindre sa valeur maximale N.

Lors d'une opération 152, le microprocesseur 77 vérifie l'intégrité de la variante obtenue à l'issue de l'opération 150. Pour cela, le microprocesseur 77 exécute la fonction f_{Ve.}Lorsque la fonction fᵥₑ est exécutée, elle construit, à partir de la variante obtenue, une redondance cryptographique MAC'ₜ qui correspond à cette variante. Ensuite, cette redondance cryptographique MAC'ₜ est comparée à la redondance MACₜ extraite du message ECMₜ. Si les redondances cryptographiques MAC'ₜ et MACₜ correspondent, c'est-à-dire typiquement qu'elles sont identiques, alors l'intégrité et l'authenticité de la variante obtenue est confirmée. Dans le cas contraire, l'intégrité et/ou l'authenticité de la variante obtenue est infirmée. Ici, la fonction fᵥₑ est identique à la fonction mise en œuvre pour construire la redondance cryptographique MACₜ. Si la redondance cryptographique MACₜ a été construite en prenant en compte des données supplémentaires contenues dans le message ECMₜ, comme par exemple les conditions CAₜ, la redondance cryptographique MAC'ₜ est elle aussi construite en prenant en compte les mêmes données supplémentaires contenues dans le message ECMₜ reçu. Par exemple, dans ce mode de réalisation, chaque redondance cryptographique MAC'ₜ est construite à partir de la variante obtenue et des conditions d'accès CAₜ.

Si l'intégrité de la variante obtenue est infirmée, à l'issue de l'opération 152, le microprocesseur 77 ne transmet pas de mot de contrôle au désembrouilleur 74. De plus, ici, le microprocesseur 77 ne déchiffre pas la variante obtenue. Ensuite, dans le cas où l'indice p est inférieur ou égal à N, le procédé retourne à l'opération 150 pour obtenir une nouvelle variante et vérifier son intégrité. A l'inverse, dans le cas où l'indice p est strictement supérieur à N, cela signifie que l'intégrité a été infirmée pour chacune de ces N variantes de la liste. Une telle situation résulte généralement d'une corruption du message ECMₜ lors de sa transmission jusqu'au terminal 10. Dans ce cas, le microprocesseur 77 interrompt le traitement du message ECMₜ reçu et exécute une opération 154.

Lors de l'opération 154, le microprocesseur 77 émet et transmet au terminal 10 un signal d'erreur qui indique qu'une erreur d'intégrité a été détectée dans le message ECMₜ reçu. En réponse à ce signal, le terminal 10 déclenche une action prédéterminée. Par exemple, le terminal 10 affiche un message sur l'écran 86 pour informer le spectateur d'une telle erreur de transmission. Une autre action possible est de demander à la tête 6 de retransmettre le message ECMₜ.

Si l'intégrité de la variante obtenue est confirmée, à l'issue de l'opération 152, le procédé se poursuit par une opération 156.

Lors de l'opération 156, la variante obtenue est déchiffrée par le microprocesseur 77 en exécutant la fonction f_{de} paramétrée par la clé Kₑ. En effet, si l'intégrité de la variante obtenue est confirmée, cela signifie que cette variante est identique au cryptogramme CW*ₜ. Dès lors, le déchiffrement de cette variante permet d'obtenir le mot de contrôle CWₜ en clair. Le mot de contrôle ainsi obtenu est ensuite transmis par le microprocesseur 77 au désembrouilleur 74.

À l'issue de l'étape 144, lors d'une étape 160, le désembrouilleur 74 utilise le mot de contrôle CWₜ transmis par le processeur 76 pour désembrouiller la cryptopériode CPₜ du contenu multimédia embrouillé.

Ensuite, lors d'une étape 162, la cryptopériode désembrouillée est décodée par le décodeur 80, puis affichée en clair sur l'écran 86 par la carte graphique 82.

Ce qui a été décrit dans le cas particulier de la cryptopériode CPₜ et du message ECMₜ est ensuite réitéré pour chaque cryptopériode et chaque message ECM de manière à désembrouiller chaque cryptopériode du contenu multimédia au fur et à mesure qu'elles sont reçues. Ici, à l'issue de l'opération 154 et de l'étape 162, le procédé retourne à l'étape 140 pour traiter un autre message ECM.

La figure 5 représente un autre procédé possible d'embrouillage des cryptopériodes du contenu multimédia. Cet autre procédé est identique à celui de la figure 3 sauf que l'étape 124 est remplacée par une étape 170. L'étape 170 est identique à l'étape 124 sauf que l'opération 130 est remplacée par une opération 172 de construction de la plage de bits PBₜ. Lors de l'opération 172, la taille de la plage PBₜ construite est égale à Nₚ. La page PBₜ est construite à partir du cryptogramme CW*ₜ en modifiant de façon aléatoire ou pseudo-aléatoire la valeur de x bits de ce cryptogramme, où x est un nombre entier tel que N = 2^{x}. Dans ce mode de réalisation, les x bits dont les valeurs sont modifiées sont situés à des positions prédéterminées et constantes dans la plage PBₜ. Par exemple, il s'agit des x premiers bits de la plage PBₜ.

La figure 6 représente le procédé de désembrouillage mis en œuvre lorsque le procédé d'embrouillage utilisé est celui de la figure 5. Le procédé de la figure 6 est identique au procédé de la figure 4 sauf que l'étape 144 est remplacée par une étape 180. L'étape 180 est identique à l'étape 144 sauf que l'opération 150 est remplacée par une opération 182. Pour simplifier la figure 6, seule l'étape 180 est représentée.

Lors de l'opération 182, à chaque fois que la fonction fₑₓ est exécutée, elle remplace les x premiers bits de la plage PBₜ par une nouvelle valeur possible différente de celles déjà proposées lors des précédentes exécutions de la fonction fₑₓ sur la même plage PBₜ. La nouvelle variante générée est alors égale à la concaténation de cette nouvelle valeur possible et des bits restants de la plage PBₜ situés entre le (x+1)-ième et le Nₚ-ième bits de cette plage.

### Variantes de la plage PBₜ et de la fonction fₑₓ:

De nombreux autres modes de réalisation sont possibles pour construire la plage PBₜ et pour la fonction fₑₓ. Par exemple, la taille de la plage PBₜ est constante est égale à Nₚ + N - 1. Ensuite, la position du cryptogramme CW*ₜ à l'intérieur de cette plage PBₜ est tirée de façon aléatoire ou pseudo-aléatoire. Les valeurs des bits de la plage PBₜ situés avant et/ou après le cryptogramme CW*ₜ sont aussi, par exemple, tirées de façon aléatoire ou pseudo-aléatoire. Dans une telle plage PBₜ, il existe donc N positions possibles pour le cryptogramme CW*ₜ. À chaque fois que la fonction fₑₓ est exécutée, elle retourne, en tant que nouvelle variante, une suite de Nₚ bits qui se trouve à une position différente dans la plage PBₜ. Par exemple, lors de sa première exécution, la fonction fₑₓ retourne la variante codée entre le premier et le Nₚ-ième bits de la plage PBₜ, lors de la deuxième exécution, elle retourne la variante située entre le deuxième et le (Nₚ+1)-ième bits de la plage PBₜ et ainsi de suite.

Dans une autre variante, la taille de la plage PBₜ est égale à la taille du cryptogramme CW*ₜ et, initialement, la valeur de la plage PBₜ est égale à la valeur du cryptogramme CW*ₜ. Cette plage PBₜ est ensuite construite en modifiant systématiquement la valeur de x bits du cryptogramme CW*ₜ. La position des x bits modifiés est tirée de façon aléatoire ou pseudo-aléatoire. Par « modifier systématiquement », on désigne ici le fait que lorsque la valeur du bit à modifier est égale à 0, on le remplace par 1 et vice-versa. Dans ce cas, à chaque fois que la fonction fₑₓ est exécutée, elle génère une nouvelle variante en modifiant systématiquement la valeur de x bits de la plage PBₜ reçue. Par exemple, si x est égal à 1, lors de la première exécution de la fonction fₑₓ, seul le premier bit de la plage PBₜ est modifié. Lors de la deuxième exécution de la fonction fₑₓ, seul le deuxième bit est modifié et ainsi de suite.

La fonction fₑₓ peut être paramétrable par un ou plusieurs paramètres. Par exemple, le nombre x de bits et la position de ces x bits à l'intérieur de la plage PBₜ peuvent être des paramètres réglables du procédé des figures 5 et 6. Dans le cas où les valeurs de ces paramètres sont modifiées, les nouvelles valeurs de ces paramètres sont, par exemple, transmises au processeur 76 par l'intermédiaire d'un message EMM ou d'un message ECM.

Un autre mode de réalisation possible pour construire la plage PBₜ consiste à appliquer au cryptogramme CW*ₜ une transformation inversible Tᵢ sélectionnée aléatoirement ou pseudo-aléatoirement dans un groupe GA composé de N transformations inversibles T₁ à TN. La plage de bits PBₜ est alors prise égale au résultat de la transformation du cryptogramme CW*ₜ par la transformation Tᵢ sélectionnée. À titre d'exemple, le groupe GA est composé des transformations inversibles et bijectives suivantes et des compositions de plusieurs des transformations inversibles de ce groupe :
- une rotation de y bits vers la droite ou vers la gauche des bits du cryptogramme CW*ₜ,
- une permutation de plusieurs bits du cryptogramme CW*ₜ situés à des positions prédéterminées à l'intérieur de ce cryptogramme, et
- une fonction de chiffrement symétrique du cryptogramme CW*ₜ avec une clé Kₐᵢ.

Lors de la réception d'un message ECMₜ comportant une plage PBₜ construite comme décrit au paragraphe précédent, à chaque exécution de la fonction fₑₓ, celle-ci sélectionne l'inverse d'une transformation du groupe GA. Par « l'inverse d'une transformation » on désigne la transformation inverse ou la transformation réciproque, c'est-à-dire la transformation bijective qui à chaque élément Tᵢ(z) associe l'élément z de départ. Ensuite, elle applique la transformation inverse sélectionnée à la plage PBₜ du message ECMₜ reçue pour obtenir la nouvelle variante. La fonction fₑₓ sélectionne les unes après les autres les transformations inverses de toutes les transformations du groupe GA.

Pour générer un plus grand nombre de variantes à partir d'une même plage de bits PBₜ, les différents modes de construction de la plage PBₜ décrits ici peuvent être combinés les uns avec les autres. Dans ce cas, pour obtenir les différentes variantes, la fonction fₑₓ exécutée est aussi une combinaison des différentes fonctions fₑₓ décrites ici.

Dans une autre variante, chaque message ECMₜ comporte, non pas seulement le cryptogramme CW*ₜ mais aussi le cryptogramme CW*ₜ₊₁. Le cryptogramme CW*ₜ₊₁ contenu dans le message ECMₜ est utilisé pour transmettre, avant la diffusion de la cryptopériode CPₜ₊₁, le mot de contrôle CWₜ₊₁ à utiliser pour désembrouiller cette cryptopériode CPₜ₊₁. Pour cela, typiquement, le message ECMₜ comporte la paire de cryptogrammes CW*/CW*ₜ₊₁ des mots de contrôle CWₜ et CWₜ₊₁, et est diffusé pendant une fin de la cryptopériode CPₜ suivie d'un début de la cryptopériode CPₜ₊₁. Cette paire de cryptogrammes CW*ₜ/CW*ₜ₊₁ est obtenue en chiffrant les mots de contrôle CWₜ et CWₜ₊₁ avec la clé Kₑ comme décrit dans le cas particulier du cryptogramme CW*ₜ seul. Les différents modes de réalisation décrits ici peuvent facilement être adaptés à cette situation en appliquant à la paire de cryptogrammes CW*ₜ/CW*ₜ₊₁ tout ce qui a été décrit dans le cas particulier du cryptogramme CW*ₜ seul. De plus, avantageusement, seules des variantes du cryptogramme CW*ₜ₊₁ sont codées dans la plage PBₜ. Dès lors, lors de la réception d'un message ECMₜ, l'exécution de la fonction fₑₓ permet d'obtenir une variante parmi une liste de N variantes de la paire CW*ₜ/CW*ₜ₊₁. Toutefois, dans cette liste, seuls les bits situés à l'emplacement du cryptogramme CW*ₜ₊₁ changent. Les bits situés à l'emplacement du cryptogramme CW*ₜ sont quant à eux identiques pour toutes les variantes de cette liste. Par exemple, les bits situés à l'emplacement du cryptogramme CW*ₜ dans chacune des variantes de cette liste sont identiques à ceux du cryptogramme CW*ₜ. Par conséquent, lors de la réception du message ECMₜ, l'exécution de la fonction fₑₓ permet de générer une variante parmi la liste de N variantes du cryptogramme CW*ₜ/CW*ₜ₊₁ dans laquelle seul le cryptogramme CW*ₜ₊₁ change d'une variante à une autre. Dès lors, le cryptogramme CW*ₜ est commun à toutes les paires de cryptogrammes de la liste. Il n'est donc pas possible d'utiliser ce cryptogramme CW*ₜ, éventuellement déjà connu puisqu'ayant précédemment été diffusé dans le message ECMₜ₋₁, pour identifier dans la liste le cryptogramme CW*ₜ₊₁ parmi les leurres.

### Autres variantes :

L'invention n'est pas limitée aux modes de synchronisation des cryptopériodes et des messages ECM décrits ici en exemples, mais s'applique notamment dans tous les modes autorisés par la norme DVB SimulCrypt (ETSI TS 103 197).

En variante, la redondance cryptographique est construite en prenant seulement en compte le cryptogramme CW*ₜ et sans prendre en compte les conditions d'accès CAₜ. À l'inverse, la redondance cryptographique peut être construite en prenant en compte des informations supplémentaires, en plus du cryptogramme CW*ₜ et/ou des conditions d'accès CAₜ, contenus dans le message ECMₜ.

Dans une autre variante, la redondance cryptographique n'est pas un code d'authentification de message. Par exemple, il n'est pas nécessaire que la redondance cryptographique permette en plus de vérifier l'authenticité du message ECMₜ. Ainsi, la redondance cryptographique peut aussi être obtenue à l'aide d'une simple fonction de hachage (« hash function » en anglais) ou de toute autre fonction similaire permettant d'obtenir une redondance cryptographique à partir de laquelle il est possible de vérifier l'intégrité du cryptogramme CW*ₜ.

Dans une autre variante, la fonction fᵥₑ n'est pas identique à celle mise en œuvre pour construire la redondance cryptographique MACₜ. C'est en particulier le cas si, au lieu d'utiliser une fonction de chiffrement symétrique, des fonctions de chiffrement asymétriques sont utilisées. Par exemple, dans ce dernier cas, la redondance cryptographique MACₜ construite par le système 28 est obtenue en chiffrant le cryptogramme CW*ₜ avec une clé privée et une fonction de chiffrement asymétrique. Pour vérifier une telle redondance cryptographique MACₜ, le microprocesseur 77 déchiffre la redondance cryptographique MACₜ reçue à l'aide d'une clé publique qui correspond à la clé privée. Il obtient ainsi une donnée en clair qu'il compare à la variante obtenue. Si la donnée en clair correspond à la variante obtenue, l'intégrité est confirmée. Dans le cas contraire, elle est infirmée.

Si la fonction fMAc de chiffrement utilisée pour construire la redondance cryptographique MACₜ est inversible, alors la fonction fᵥₑ peut aussi être l'inverse de la fonction f_{MAC}. Dans ce cas, le microprocesseur 77 construit une donnée en clair en déchiffrant à l'aide de la fonction fᵥₑ la redondance cryptographique MACₜ. Ensuite, cette donnée en clair est comparée à la variante obtenue. Si elles sont identiques ou si elles correspondent, l'intégrité de la variante obtenue est confirmée. Dans le cas contraire, elle est infirmée. C'est en particulier le cas lorsque les procédés de construction et de vérification de la redondance cryptographique objets du brevet FR2918830, sont utilisés pour construire et vérifier MACₜ.

En variante, la fonction fₑₓ est exécutée une seule fois pour chaque message ECMₜ reçu. Dans ce cas, lors de cette unique exécution, la fonction fₑₓ génère en une seule fois la liste des N variantes au lieu de les générer les unes après les autres. Ensuite, le procédé est identique à ce qui a été décrit ici, sauf qu'au lieu d'exécuter à chaque fois la fonction fₑₓ pour obtenir une nouvelle variante, cette nouvelle variante est sélectionnée dans la liste générée en une seule fois lors de l'unique exécution de cette fonction fₑₓ.

Dans une autre variante, même si l'intégrité de la variante est infirmée, celle-ci est déchiffrée mais n'est pas transmise au désembrouilleur 74.

La transmission du signal d'erreur lorsque l'intégrité des N variantes est infirmée peut être omise.

Le processeur de sécurité n'est pas nécessairement une carte à puce. Il peut aussi s'agir d'un composant matériel intégré de façon définitive au terminal 10. Par exemple, il peut s'agir d'un coprocesseur de sécurité intégré au microprocesseur du terminal 10. Le processeur de sécurité peut également être un composant logiciel.

### Avantages des différents modes de réalisation décrits :

Dans les procédés décrits, pour distinguer le cryptogramme CW*ₜ parmi les N-1 leurres, il faut utiliser la fonction fᵥₑ. Dès lors, pour réussir à déchiffrer le cryptogramme CW*ₜ, un pirate informatique doit, en plus de réussir la cryptanalyse de la fonction f_{de} et de la clé Kₑ, également réussir la cryptanalyse de cette fonction fᵥₑ. Cela rend donc les procédés décrits plus robustes vis-à-vis des tentatives de cryptanalyse.

L'utilisation en tant que redondance cryptographique d'un code d'authentification de message rend les procédés décrits encore plus robustes vis-à-vis des tentatives de cryptanalyse. En effet, la construction des codes d'authentification de message fait appel à des fonctions cryptographiques qui sont difficiles à cryptanalyser.

Choisir N compris entre trois et huit permet d'obtenir un bon compromis entre la robustesse du procédé et sa rapidité d'exécution.

Générer les N variantes à partir d'une plage PBₜ qui a la même taille que le cryptogramme CW*ₜ ou que la paire de cryptogrammes CW*ₜ/CW*ₜ₊₁ permet de mettre en œuvre les procédés décrits sans augmenter la taille des messages ECM et donc sans augmenter la bande passante requise pour la transmission de ces messages. Cela peut en outre présenter l'avantage supplémentaire d'interdire la détection de la mise en œuvre des procédés selon l'invention par la seule analyse de la structure des messages ECM diffusés.

La transmission du signal d'erreur au terminal permet de déclencher les mêmes actions que celles qui seraient exécutées en absence d'implémentation des procédés décrits ici. Grâce à cela, la mise en œuvre des procédés décrits ne nécessite pas nécessairement de modifier le terminal 10.

Comme expliqué précédemment, dans le cas où chaque message ECM contient à la fois les cryptogrammes CW*ₜ et CW*ₜ₊₁, le fait de coder uniquement des variantes du cryptogramme CW*ₜ₊₁ dans le message ECMₜpermet de rendre plus difficile l'identification du cryptogramme CW*ₜ₊₁ parmi les N-1 leurres.

## Revendications

1. Procédé de réception et de déchiffrement d'un cryptogramme d'un mot de contrôle utilisable pour désembrouiller une cryptopériode d'un contenu multimédia, ce procédé comportant :
a) la réception (140) d'un message de contrôle d'accès contenant :
• une plage de bits à partir de laquelle un cryptogramme CW*ₜ du mot de contrôle peut être obtenu, et
• une redondance cryptographique qui permet de vérifier l'intégrité du cryptogramme CW*ₜ, **caractérisé en ce que** ce procédé comporte ensuite :
b) l'obtention (150 ; 182) d'une variante particulière du cryptogramme CW*ₜ qui appartient à une liste de N variantes différentes du cryptogramme CW*ₜ, cette liste comportant une variante identique au cryptogramme CW*ₜ et toutes les autres variantes qui appartiennent à cette liste étant des leurres distincts les uns des autres du cryptogramme CW*ₜ qui ne permettent pas de désembrouiller la cryptopériode, N étant un entier supérieur ou égal à deux, chacune des variantes qui appartiennent à cette liste étant générée à partir de la même plage de bits du message de contrôle d'accès reçu, en traitant cette plage de bits à l'aide d'une fonction d'extraction prédéterminée apte à générer, lorsqu'elle est exécutée par un microprocesseur, à partir de cette plage de bits, chacune des N variantes qui appartiennent à cette liste, puis
c) la vérification (152) de l'intégrité de la variante obtenue, à partir de la redondance cryptographique contenue dans le message de contrôle d'accès reçu, en exécutant une fonction prédéterminée et secrète de vérification apte à confirmer et, en alternance, à infirmer l'intégrité de la variante obtenue, lorsque cette fonction est exécutée par un microprocesseur,
d) uniquement si, lors de l'étape c), l'intégrité de la variante obtenue est confirmée, le déchiffrement (156) de la variante obtenue, avec une clé d'exploitation, pour obtenir le mot de contrôle déchiffré, puis la transmission (156) du mot de contrôle déchiffré à un désembrouilleur pour désembrouiller la cryptopériode du contenu multimédia embrouillé,
e) si, lors de l'étape c), l'intégrité de la variante obtenue est infirmée, la non-transmission au désembrouilleur de la variante obtenue, et
- s'il existe une autre variante du cryptogramme CW*ₜ qui appartient à la liste de N variantes et pour laquelle l'étape c) n'a pas encore été exécutée : le retour du procédé à l'étape b) pour obtenir cette autre variante, puis la réitération de l'étape c) et de l'étape d) ou e) pour cette autre variante, et en alternance,
- si l'étape c) a déjà été exécutée pour chacune des variantes qui appartiennent à la liste de N variantes : l'interruption du traitement du message de contrôle d'accès reçus lors de l'étape a).

2. Procédé selon la revendication 1, dans lequel si l'intégrité de chacune des variantes obtenues qui appartiennent à la liste de N variantes a été infirmée, alors le procédé retourne à l'étape a) pour recevoir un nouveau message de contrôle d'accès à traiter.

3. Procédé selon l'une quelconque des revendications précédentes, dans lequel la redondance cryptographique est un code d'authentification de message et, lors de l'étape c), le procédé comporte à la fois la vérification (152) de l'intégrité du cryptogramme CW*ₜ et la vérification (152) de l'authenticité du cryptogramme CW*ₜ.

4. Procédé selon l'une quelconque des revendications précédentes, dans lequel N est compris entre trois et huit.

5. Procédé selon l'une quelconque des revendications précédentes, dans lequel la plage de bits contenue dans le message de contrôle d'accès comporte exactement le même nombre de bits que le cryptogramme CW*ₜ et, lors de l'étape b), la fonction d'extraction prédéterminée est apte à générer, lorsqu'elle est exécutée par un microprocesseur, les N variantes différentes comportant chacune exactement le même nombre de bits que le cryptogramme CW*ₜ à partir de cette plage de bits.

6. Procédé selon l'une quelconque des revendications précédentes, dans lequel, uniquement en réponse au fait que les étapes c) et e) ont été réitérées pour toutes les variantes de la liste, le procédé comporte l'émission (154) d'un signal indiquant que l'intégrité du cryptogramme CW*ₜ est infirmée.

7. Procédé de génération et d'émission d'un cryptogramme d'un mot de contrôle utilisable pour désembrouiller une cryptopériode d'un contenu multimédia, le cryptogramme généré et émis étant apte à être reçu et déchiffré à l'aide d'un procédé conforme à l'une quelconque des revendications précédentes, ce procédé comportant :
a) la génération (120) d'un mot de contrôle CWₜ utilisé pour embrouiller la cryptopériode du contenu multimédia,
b) le chiffrement (126) du mot de contrôle CWₜ avec la clé d'exploitation pour obtenir le cryptogramme CW*ₜ de ce mot de contrôle,
c) la construction (128) d'une redondance cryptographique à partir du cryptogramme CW*ₜ, cette redondance cryptographique permettant de vérifier l'intégrité du cryptogramme CW*ₜ en exécutant la fonction prédéterminée et secrète de vérification apte à confirmer et, en alternance, à infirmer l'intégrité de ce cryptogramme lorsque cette fonction est exécutée par un microprocesseur,
**caractérisé en ce que** le procédé comporte ensuite :
d) la construction (130 ; 172) d'une plage de bits à partir du cryptogramme CW*ₜ permettant, en traitant cette plage de bits à l'aide de la fonction d'extraction prédéterminée, de générer, lorsque la fonction d'extraction est exécutée par un microprocesseur, à partir de cette plage de bits, chacune des variantesqui appartiennent à une liste de N variantes différentes du cryptogramme CW*ₜ, cette liste comportant une variante identique au cryptogramme CW*ₜ et toutes les autres variantes étant des leurres distincts les uns des autres du cryptogramme CW*ₜ, qui ne permettent pas de désembrouiller la cryptopériode, N étant un entier supérieur ou égal à deux,
e) la génération (132) du message de contrôle d'accès comportant la plage de bits construite et la redondance cryptographique construite, et
f) la transmission (136) du message de contrôle d'accès construit vers un récepteur apte à déchiffrer le cryptogramme CW*ₜ contenu dans ce message de contrôle d'accès.

8. Procédé selon la revendication 7, dans lequel :
- les étapes a) à b) sont exécutées pour un premier mot de contrôle CWₜ destiné à embrouiller une première cryptopériode, puis les étapes a) à f) sont exécutées pour un deuxième mot de contrôle CWₜ₊₁ destiné à embrouiller une deuxième cryptopériode, les première et deuxième cryptopériodes étant des cryptopériodes immédiatement successives dans le temps,
- lors de l'exécution l'étape e) exécutée pour le deuxième mot de contrôle CWₜ₊₁, le message de contrôle d'accès généré comprend le cryptogrammes CW*ₜ et la plage de bits est construite de manière à coder N variantes du cryptogramme CW*ₜ₊₁ et aucune variante du cryptogramme CW*ₜ.

9. Support d'enregistrement d'informations, **caractérisé en ce qu'**il comporte des instructions pour la mise en œuvre d'un procédé conforme à l'une quelconque des revendications précédentes, lorsque ces instructions sont exécutées par un microprocesseur électronique.

10. Tête (6) de réseau pour la mise en œuvre d'un procédé conforme à l'une quelconque des revendications 7 à 8, cette tête de réseau comportant :
a) un générateur (32) apte à générer un mot de contrôle CWₜ utilisé pour embrouiller la cryptopériode du contenu multimédia,
b) un système (28) d'accès conditionnel apte :
- à chiffrer le mot de contrôle CWₜ avec la clé d'exploitation pour obtenir le cryptogramme CW*ₜ de ce mot de contrôle,
- à construire une redondance cryptographique à partir du cryptogramme CW*ₜ, cette redondance cryptographique permettant de vérifier l'intégrité du cryptogramme CW*ₜ en exécutant la fonction prédéterminée et secrète de vérification apte à confirmer et, en alternance, à infirmer l'intégrité de ce cryptogramme lorsque cette fonction est exécutée par un microprocesseur,
**caractérisé en ce que** le système (28) d'accès conditionnel est également apte :
- à construire une plage de bits à partir du cryptogramme CW*ₜ permettant, en traitant cette plage de bits à l'aide de la fonction d'extraction prédéterminée, de générer, lorsque la fonction d'extraction est exécutée par un microprocesseur, à partir de cette plage de bits, chacune des variantes qui appartiennent à une liste de N variantes différentes du cryptogramme CW*ₜ, cette liste comportant une variante identique au cryptogramme CW*ₜ et toutes les autres variantes étant des leurres distincts les uns des autres du cryptogramme CW*ₜ, qui ne permettent pas de désembrouiller la cryptopériode, N étant un entier supérieur ou égal à deux,
- à générer le message de contrôle d'accès comportant la plage de bits construite et la redondance cryptographique construite, et
- à transmettre le message de contrôle d'accès construit vers un récepteur apte à déchiffrer le cryptogramme CW*ₜ contenu dans ce message de contrôle d'accès.

11. Processeur (76) de sécurité pour la mise en œuvre d'un procédé conforme à l'une quelconque des revendications 1 à 6, ce processeur de sécurité comportant un microprocesseur (77) programmé pour réaliser l'étape suivante :
a) la réception d'un message de contrôle d'accès contenant :
• une plage de bits à partir de laquelle un cryptogramme CW*ₜ du mot de contrôle peut être obtenu, et
• une redondance cryptographique qui permet de vérifier l'intégrité du cryptogramme CW*ₜ,
**caractérisé en ce que** ce microprocesseur (77) est également programmé pour réaliser les étapes suivantes :
b) l'obtention d'une variante particulière du cryptogramme CW*ₜ qui appartient à une liste de N variantes différentes du cryptogramme CW*ₜ, cette liste comportant une variante identique au cryptogramme CW*ₜ et toutes les autres variantes qui appartiennent à cette liste étant des leurres distincts les uns des autres du cryptogramme CW*ₜ qui ne permettent pas de désembrouiller la cryptopériode, N étant un entier supérieur ou égal à deux, chacune des variantes de cette liste étant générée à partir de la même plage de bits du message de contrôle d'accès reçu, en traitant cette plage de bits à l'aide d'une fonction d'extraction prédéterminée apte à générer, lorsqu'elle est exécutée par un microprocesseur, à partir de cette plage de bits, chacune des variantes qui appartiennent à cette liste, puis
c) la vérification de l'intégrité de la variante obtenue, à partir de la redondance cryptographique contenue dans le message de contrôle d'accès reçu, en exécutant une fonction prédéterminée et secrète de vérification apte à confirmer et, en alternance, à infirmer l'intégrité de la variante obtenue, lorsque cette fonction est exécutée par un microprocesseur,
d) uniquement si, lors de l'étape c), l'intégrité de la variante obtenue est confirmée, le déchiffrement de la variante obtenue avec une clé d'exploitation pour obtenir le mot de contrôle déchiffré, puis la transmission du mot de contrôle déchiffré à un désembrouilleur pour désembrouiller la cryptopériode du contenu multimédia embrouillé,
e) si, lors de l'étape c), l'intégrité de la variante obtenue est infirmée, la non-transmission, au désembrouilleur, de la variante obtenue, et
- s'il existe une autre variante du cryptogramme CW*ₜ qui appartient à la liste de N variantes et pour laquelle l'étape c) n'a pas encore été exécutée : le retour du procédé à l'étape b) pour obtenir cette autre variante, puis la réitération de l'étape c) et de l'étape d) ou e) pour cette autre variante, et en alternance,
- si l'étape c) a déjà été exécutée pour chacune des variantes qui appartiennent à la liste de N variantes : l'interruption du traitement du message de contrôle d'accès reçus lors de l'étape a).

## Patentansprüche

1. Verfahren zum Empfangen und Entschlüsseln eines Kryptogramms eines Steuerworts, das dazu verwendet werden kann, eine Kryptoperiode eines Multimedia-Inhalts zu descrambeln, wobei dieses Verfahren Folgendes umfasst:
a) Empfangen (140) einer Zugangssteuerungsnachricht, die Folgendes enthält:
• einen Bitbereich, mittels dessen ein Kryptogramm CW*ₜ des Steuerworts erhalten werden kann, und
• eine kryptographische Redundanz, die es gestattet, die Integrität des Kryptogramms CW*ₜ zu überprüfen,
**dadurch gekennzeichnet, dass** dieses Verfahren im Anschluss Folgendes umfasst:
b) Erhalten (150; 182) einer speziellen Variante des Kryptogramms CW*ₜ, die zu einer Liste mit N verschiedenen Varianten des Kryptogramms CW*ₜ gehört, wobei diese Liste eine Variante, die mit dem Kryptogramm CW*ₜ identisch ist, umfasst und alle anderen Varianten, die zu dieser Liste gehören, voneinander verschiedene Imitationen des Kryptogramms CW*ₜ sind, die es nicht gestatten, die Kryptoperiode zu descrambeln, wobei N eine ganze Zahl größer als oder gleich zwei ist, wobei jede der Varianten, die zu dieser Liste gehören, mittels desselben Bitbereichs der empfangenen Zugangssteuerungsnachricht generiert wird, indem dieser Bitbereich mit Hilfe einer vorgegebenen Extraktionsfunktion verarbeitet wird, die dazu fähig ist, bei Ausführung durch einen Mikroprozessor jede der N Varianten, die zu dieser Liste gehören, mittels dieses Bitbereichs zu generieren, und dann
c) Überprüfen (152) der Integrität der erhaltenen Variante mittels der in der empfangenen Zugangssteuerungsnachricht enthaltenen kryptographischen Redundanz, indem eine vorgegebene und geheime Überprüfungsfunktion ausgeführt wird, die dazu fähig ist, bei Ausführung dieser Funktion durch einen Mikroprozessor die Integrität der erhaltenen Variante zu bestätigen und alternativ abzulehnen,
d) nur, wenn während des Schritts c) die Integrität der erhaltenen Variante bestätigt wird, Entschlüsseln (156) der erhaltenen Variante mit einem Nutzungsschlüssel, um das entschlüsselte Steuerwort zu erhalten, und dann Übertragen (156) des entschlüsselten Steuerworts an einen Descrambler, um die Kryptoperiode des gescrambelten Multimedia-Inhalts zu descrambeln,
e) wenn während des Schritts c) die Integrität der erhaltenen Variante abgelehnt wird, Nichtübertragen der erhaltenen Variante an den Descrambler, und
- wenn eine andere Variante des Kryptogramms CW*ₜ existiert, die zu der Liste mit N Varianten gehört und für die Schritt c) noch nicht ausgeführt wurde: Zurückkehren des Verfahrens zu Schritt b), um diese andere Variante zu erhalten, und dann Wiederholen des Schritts c) und des Schritts d) oder e) für diese andere Variante, und alternativ,
- wenn Schritt c) bereits für jede der Varianten, die zu der Liste mit N Varianten gehören, ausgeführt wurde: Unterbrechen der Verarbeitung der während des Schritts a) empfangenen Zugangssteuerungsnachricht.

2. Verfahren nach Anspruch 1, wobei, wenn die Integrität jeder der erhaltenen Varianten, die zu der Liste mit N Varianten gehören, abgelehnt wurde, das Verfahren zu Schritt a) zurückkehrt, um eine neue zu verarbeitende Zugangssteuerungsnachricht zu empfangen.

3. Verfahren nach einem der vorhergehenden Ansprüche, wobei die kryptographische Redundanz ein Nachrichtenauthentifizierungscode ist und das Verfahren während des Schritts c) zugleich das Überprüfen (152) der Integrität des Kryptogramms CW*ₜ und das Überprüfen (152) der Authentizität des Kryptogramms CW*ₜ umfasst.

4. Verfahren nach einem der vorhergehenden Ansprüche, wobei N zwischen drei und acht liegt.

5. Verfahren nach einem der vorhergehenden Ansprüche, wobei der in der Zugangssteuerungsnachricht enthaltene Bitbereich genau dieselbe Anzahl an Bits wie das Kryptogramm CW*ₜ umfasst und die vorgegebene Extraktionsfunktion während des Schritts b) dazu fähig ist, bei Ausführung durch einen Mikroprozessor die N verschiedenen Varianten, die jeweils genau dieselbe Anzahl an Bits wie das Kryptogramm CW*ₜ umfassen, mittels dieses Bitbereichs zu generieren.

6. Verfahren nach einem der vorhergehenden Ansprüche, wobei das Verfahren, ausschließlich als Reaktion auf die Tatsache, dass die Schritte c) und e) für alle Varianten der Liste wiederholt wurden, das Senden (154) eines Signals umfasst, das angibt, dass die Integrität des Kryptogramms CW*ₜ abgelehnt wird.

7. Verfahren zum Generieren und Senden eines Kryptogramms eines Steuerworts, das dazu verwendet werden kann, eine Kryptoperiode eines Multimedia-Inhalts zu descrambeln, wobei das generierte und gesendete Kryptogramm mit Hilfe eines Verfahrens nach einem der vorhergehenden Ansprüche empfangen und entschlüsselt werden kann, wobei dieses Verfahren Folgendes umfasst:
a) Generieren (120) eines Steuerworts CWₜ, das dazu verwendet wird, die Kryptoperiode des Multimedia-Inhalts zu scrambeln,
b) Verschlüsseln (126) des Steuerworts CWₜ mit dem Nutzungsschlüssel, um das Kryptogramm CW*ₜ dieses Steuerworts zu erhalten,
c) Bilden (128) einer kryptographischen Redundanz mittels des Kryptogramms CW*ₜ, wobei es diese kryptographische Redundanz gestattet, die Integrität des Kryptogramms CW*ₜ zu überprüfen, indem die vorgegebene und geheime Überprüfungsfunktion ausgeführt wird, die dazu fähig ist, bei Ausführung dieser Funktion durch einen Mikroprozessor die Integrität dieses Kryptogramms zu bestätigen und alternativ abzulehnen,
**dadurch gekennzeichnet, dass** das Verfahren im Anschluss Folgendes umfasst:
d) Bilden (130; 172) eines Bitbereichs mittels des Kryptogramms CW*ₜ, was es gestattet, durch die Verarbeitung dieses Bitbereichs mit Hilfe der vorgegebenen Extraktionsfunktion jede der Varianten, die zu einer Liste mit N verschiedenen Varianten des Kryptogramms CW*ₜ gehören, mittels dieses Bitbereichs zu generieren, wenn die Extraktionsfunktion durch einen Mikroprozessor ausgeführt wird, wobei diese Liste eine Variante, die mit dem Kryptogramm CW*ₜ identisch ist, umfasst und alle anderen Varianten voneinander verschiedene Imitationen des Kryptogramms CW*ₜ sind, die es nicht gestatten, die Kryptoperiode zu descrambeln, wobei N eine ganze Zahl größer als oder gleich zwei ist,
e) Generieren (132) der Zugangssteuerungsnachricht, die den gebildeten Bitbereich und die gebildete kryptographische Redundanz umfasst, und
f)Übertragen (136) der gebildeten Zugangssteuerungsnachricht an eine Empfangseinheit, die dazu fähig ist, das in dieser Zugangssteuerungsnachricht enthaltene Kryptogramm CW*ₜ zu entschlüsseln.

8. Verfahren nach Anspruch 7, wobei:
- die Schritte a) bis b) für ein erstes Steuerwort CWₜ, das dazu bestimmt ist, eine erste Kryptoperiode zu scrambeln, ausgeführt werden und dann die Schritte a) bis f) für ein zweites Steuerwort CWₜ₊₁, das dazu bestimmt ist, eine zweite Kryptoperiode zu scrambeln, ausgeführt werden, wobei die erste und die zweite Kryptoperiode zeitlich direkt aufeinanderfolgende Kryptoperioden sind,
- während der Ausführung des Schritts e), der für das zweite Steuerwort CWₜ₊₁ ausgeführt wird, die generierte Zugangssteuerungsnachricht das Kryptogramm CW*ₜ beinhaltet und der Bitbereich so gebildet wird, dass N Varianten des Kryptogramms CW*ₜ₊₁ und keine Variante des Kryptogramms CW*ₜ codiert werden.

9. Informationsaufzeichnungsmedium, **dadurch gekennzeichnet, dass** es Anweisungen zur Umsetzung eines Verfahrens nach einem der vorhergehenden Ansprüche beinhaltet, wenn diese Anweisungen durch einen elektronischen Mikroprozessor ausgeführt werden.

10. Kopf (6) eines Netzes für die Umsetzung eines Verfahrens nach einem der Ansprüche 7 bis 8, wobei dieser Netzkopf Folgendes umfasst:
a) eine Generierungseinheit (32), die dazu fähig ist, ein Steuerwort CWₜ, das dazu verwendet wird, die Kryptoperiode des Multimedia-Inhalts zu scrambeln, zu generieren,
b) ein System (28) für einen bedingten Zugang, das zu Folgendem fähig ist:
- Verschlüsseln des Steuerworts CWₜ mit dem Nutzungsschlüssel, um das Kryptogramm CW*ₜ dieses Steuerworts zu erhalten,
- Bilden einer kryptographischen Redundanz mittels des Kryptogramms CW*ₜ, wobei es diese kryptographische Redundanz gestattet, die Integrität des Kryptogramms CW*ₜ zu überprüfen, indem die vorgegebene und geheime Überprüfungsfunktion ausgeführt wird, die dazu fähig ist, bei Ausführung dieser Funktion durch einen Mikroprozessor die Integrität dieses Kryptogramms zu bestätigen und alternativ abzulehnen,
**dadurch gekennzeichnet, dass** das System (28) für einen bedingten Zugang ferner zu Folgendem fähig ist:
- Bilden eines Bitbereichs mittels des Kryptogramms CW*ₜ, was es gestattet, durch die Verarbeitung dieses Bitbereichs mit Hilfe der vorgegebenen Extraktionsfunktion jede der Varianten, die zu einer Liste mit N verschiedenen Varianten des Kryptogramms CW*ₜ gehören, mittels dieses Bitbereichs zu generieren, wenn die Extraktionsfunktion durch einen Mikroprozessor ausgeführt wird, wobei diese Liste eine Variante, die mit dem Kryptogramm CW*ₜ identisch ist, umfasst und alle anderen Varianten voneinander verschiedene Imitationen des Kryptogramms CW*ₜ sind, die es nicht gestatten, die Kryptoperiode zu descrambeln, wobei N eine ganze Zahl größer als oder gleich zwei ist,
- Generieren der Zugangssteuerungsnachricht, die den gebildeten Bitbereich und die gebildete kryptographische Redundanz umfasst, und
- Übertragen der gebildeten Zugangssteuerungsnachricht an eine Empfangseinheit, die dazu fähig ist, das in dieser Zugangssteuerungsnachricht enthaltene Kryptogramm CW*ₜ zu entschlüsseln.

11. Sicherheitsprozessor (76) für die Umsetzung eines Verfahrens nach einem der Ansprüche 1 bis 6, wobei dieser Sicherheitsprozessor einen Mikroprozessor (77) umfasst, der dazu programmiert ist, den folgenden Schritt durchzuführen:
a) Empfangen einer Zugangssteuerungsnachricht, die Folgendes enthält:
• einen Bitbereich, mittels dessen ein Kryptogramm CW*ₜ des Steuerworts erhalten werden kann, und
• eine kryptographische Redundanz, die es gestattet, die Integrität des Kryptogramms CW*ₜ zu überprüfen,
**dadurch gekennzeichnet, dass** dieser Mikroprozessor (77) ferner dazu programmiert ist, die folgenden Schritte durchzuführen:
b) Erhalten einer speziellen Variante des Kryptogramms CW*ₜ, die zu einer Liste mit N verschiedenen Varianten des Kryptogramms CW*ₜ gehört, wobei diese Liste eine Variante, die mit dem Kryptogramm CW*ₜ identisch ist, umfasst und alle anderen Varianten, die zu dieser Liste gehören, voneinander verschiedene Imitationen des Kryptogramms CW*ₜ sind, die es nicht gestatten, die Kryptoperiode zu descrambeln, wobei N eine ganze Zahl größer als oder gleich zwei ist, wobei jede der Varianten dieser Liste mittels desselben Bitbereichs der empfangenen Zugangssteuerungsnachricht generiert wird, indem dieser Bitbereich mit Hilfe einer vorgegebenen Extraktionsfunktion verarbeitet wird, die dazu fähig ist, bei Ausführung durch einen Mikroprozessor jede der Varianten, die zu dieser Liste gehören, mittels dieses Bitbereichs zu generieren, und dann
c) Überprüfen der Integrität der erhaltenen Variante mittels der in der empfangenen Zugangssteuerungsnachricht enthaltenen kryptographischen Redundanz, indem eine vorgegebene und geheime Überprüfungsfunktion ausgeführt wird, die dazu fähig ist, bei Ausführung dieser Funktion durch einen Mikroprozessor die Integrität der erhaltenen Variante zu bestätigen und alternativ abzulehnen,
d) nur, wenn während des Schritts c) die Integrität der erhaltenen Variante bestätigt wird, Entschlüsseln der erhaltenen Variante mit einem Nutzungsschlüssel, um das entschlüsselte Steuerwort zu erhalten, und dann Übertragen des entschlüsselten Steuerworts an einen Descrambler, um die Kryptoperiode des gescrambelten Multimedia-Inhalts zu descrambeln,
e) wenn während des Schritts c) die Integrität der erhaltenen Variante abgelehnt wird, Nichtübertragen der erhaltenen Variante an den Descrambler, und
- wenn eine andere Variante des Kryptogramms CW*ₜ existiert, die zu der Liste mit N Varianten gehört und für die Schritt c) noch nicht ausgeführt wurde: Zurückkehren des Verfahrens zu Schritt b), um diese andere Variante zu erhalten, und dann Wiederholen des Schritts c) und des Schritts d) oder e) für diese andere Variante, und alternativ,
- wenn Schritt c) bereits für jede der Varianten, die zu der Liste mit N Varianten gehören, ausgeführt wurde: Unterbrechen der Verarbeitung der während des Schritts a) empfangenen Zugangssteuerungsnachricht.

## Claims

1. Method for receiving and decrypting a cryptogram of a control word able to be used to descramble a cryptoperiod of an item of multimedia content, this method comprising:
a) receiving (140) an access control message containing:
• a bit range from which a cryptogram CW*ₜ of the control word is able to be obtained, and
• cryptographic redundancy that makes it possible to check the integrity of the cryptogram CW*ₜ,
**characterized in that** this method then comprises:
b) obtaining (150; 182) a particular variant of the cryptogram CW*ₜ that belongs to a list of N different variants of the cryptogram CW*ₜ, this list comprising a variant identical to the cryptogram CW*ₜ and all of the other variants that belong to this list being mutually different decoys of the cryptogram CW*ₜ that do not make it possible to descramble the cryptoperiod, N being an integer greater than or equal to two, each of the variants that belong to this list being generated from the same bit range of the received access control message, by processing this bit range using a predetermined extraction function able to generate, when it is executed by a microprocessor, from this bit range, each of the N variants that belong to this list, and then
c) checking (152) the integrity of the obtained variant, based on the cryptographic redundancy contained in the received access control message, by executing a predetermined and secret check function able to confirm and, alternately, to invalidate the integrity of the obtained variant, when this function is executed by a microprocessor,
d) only if, in step c), the integrity of the obtained variant is confirmed, decrypting (156) the obtained variant, with an operating key, in order to obtain the decrypted control word, and then transmitting (156) the decrypted control word to a descrambler in order to descramble the cryptoperiod of the scrambled item of multimedia content,
e) if, in step c), the integrity of the obtained variant is invalidated, not transmitting the obtained variant to the descrambler, and
- if there is another variant of the cryptogram CW*ₜ that belongs to the list of N variants and for which step c) has not yet been executed: returning the method to step b) in order to obtain this other variant, and then reiterating step c) or step d) or e) for this other variant, and alternately
- if step c) has already been executed for each of the variants that belong to the list of N variants: interrupting the processing of the access control message received in step a).

2. Method according to Claim 1, wherein, if the integrity of each of the obtained variants that belong to the list of N variants is invalidated, then the method returns to step a) in order to receive a new access control message to be processed.

3. Method according to either one of the preceding claims, wherein the cryptographic redundancy is a message authentication code and, in step c), the method comprises both checking (152) the integrity of the cryptogram CW*ₜ and checking (152) the authenticity of the cryptogram CW*ₜ.

4. Method according to any one of the preceding claims, wherein N is between three and eight.

5. Method according to any one of the preceding claims, wherein the bit range contained in the access control message comprises exactly the same number of bits as the cryptogram CW*ₜ and, in step b), the predetermined extraction function is able to generate, when it is executed by a microprocessor, the N different variants each comprising exactly the same number of bits as the cryptogram CW*ₜ from this bit range.

6. Method according to any one of the preceding claims, wherein, only in response to steps c) and e) having been reiterated for all of the variants in the list, the method comprises transmitting (154) a signal indicating that the entire cryptogram CW*ₜ is invalidated.

7. Method for generating and transmitting a cryptogram of a control word able to be used to descramble a cryptoperiod of an item of multimedia content, the generated and transmitted cryptogram being able to be received and decrypted using a method according to any one of the preceding claims, this method comprising:
a) generating (120) a control word CWₜ used to scramble the cryptoperiod of the item of multimedia content,
b) encrypting (126) the control word CWₜ with the operating key in order to obtain the cryptogram CW*ₜ of this control word,
c) constructing (128) cryptographic redundancy from the cryptogram CW*ₜ, this cryptographic redundancy making it possible to check the integrity of the cryptogram CW*ₜ by executing the predetermined and secret check function able to confirm and, alternately, to invalidate the integrity of this cryptogram when this function is executed by a microprocessor,
**characterized in that** the method then comprises:
d) constructing (130; 172) a bit range from the cryptogram CW^{*}ₜ that makes it possible, by processing this bit range using the predetermined extraction function, to generate, when the extraction function is executed by a microprocessor, from this bit range, each of the variants that belong to a list of N different variants of the cryptogram CW*ₜ, this list comprising a variant identical to the cryptogram CW*ₜ and all of the other variants being mutually different decoys of the cryptogram CW*ₜ that do not make it possible to descramble the cryptoperiod, N being an integer greater than or equal to two,
e) generating (132) the access control message comprising the constructed bit range and the constructed cryptographic redundancy, and
f) transmitting (136) the constructed access control message to a receiver able to decrypt the cryptogram CW*ₜ contained in this access control message.

8. Method according to Claim 7, wherein:
- steps a) to b) are executed for a first control word CWₜ intended to scramble a first cryptoperiod, and then steps a) to f) are executed for a second control word CWₜ₊₁ intended to scramble a second cryptoperiod, the first and second cryptoperiods being cryptoperiods that succeed one another immediately in time,
- when executing step e) executed for the second control word CW*ₜ₊₁, the generated access control message comprises the cryptogram CW*ₜ and the bit range is constructed so as to code N variants of the cryptogram CW*ₜ₊₁ and no variant of the cryptogram CW*ₜ.

9. Information recording medium, **characterized in that** it comprises instructions for implementing a method according to any one of the preceding claims, when these instructions are executed by an electronic microprocessor.

10. Network head (6) for implementing a method according to either one of Claims 7 and 8, this network head comprising:
a) a generator (32) able to generate a control word CWₜ used to scramble the cryptoperiod of the item of multimedia content,
b) a conditional access system (28) able:
- to encrypt the control word CWₜ with the operating key in order to obtain the cryptogram CW*ₜ of this control word,
- to construct cryptographic redundancy from the cryptogram CW*ₜ, this cryptographic redundancy making it possible to check the integrity of the cryptogram CW*ₜ by executing the predetermined and secret check function able to confirm and, alternately, to invalidate the integrity of this cryptogram when this function is executed by a microprocessor, **characterized in that** the conditional access system (28) is also able:
- to construct a bit range from the cryptogram CW*ₜ that makes it possible, by processing this bit range using the predetermined extraction function, to generate, when the extraction function is executed by a microprocessor, from this bit range, each of the variants that belong to a list of N different variants of the cryptogram CW*ₜ, this list comprising a variant identical to the cryptogram CW*ₜ and all of the other variants being mutually different decoys of the cryptogram CW*ₜ that do not make it possible to descramble the cryptoperiod, N being an integer greater than or equal to two,
- to generate the access control message comprising the constructed bit range and the constructed cryptographic redundancy, and
- to transmit the constructed access control message to a receiver able to decrypt the cryptogram CW*ₜ contained in this access control message.

11. Security processor (76) for implementing a method according to any one of Claims 1 to 6, this security processor comprising a microprocessor (77) programmed to perform the following step:
a) receiving an access control message containing:
• a bit range from which a cryptogram CW*ₜ of the control word is able to be obtained, and
• cryptographic redundancy that makes it possible to check the integrity of the cryptogram CW*ₜ,
**characterized in that** this microprocessor (77) is also programmed to perform the following steps:
b) obtaining a particular variant of the cryptogram CW*ₜ that belongs to a list of N different variants of the cryptogram CW*ₜ, this list comprising a variant identical to the cryptogram CW*ₜ and all of the other variants that belong to this list being mutually different decoys of the cryptogram CW*ₜ that do not make it possible to descramble the cryptoperiod, N being an integer greater than or equal to two, each of the variants in this list being generated from the same bit range of the received access control message, by processing this bit range using a predetermined extraction function able to generate, when it is executed by a microprocessor, from this bit range, each of the variants that belong to this list, and then
c) checking the integrity of the obtained variant, based on the cryptographic redundancy contained in the received access control message, by executing a predetermined and secret check function able to confirm and, alternately, to invalidate the integrity of the obtained variant, when this function is executed by a microprocessor,
d) only if, in step c), the integrity of the obtained variant is confirmed, decrypting the obtained variant with an operating key in order to obtain the decrypted control word, and then transmitting the decrypted control word to a descrambler in order to descramble the cryptoperiod of the scrambled item of multimedia content,
e) if, in step c), the integrity of the obtained variant is invalidated, not transmitting the obtained variant to the descrambler, and
- if there is another variant of the cryptogram CW*ₜ that belongs to the list of N variants and for which step c) has not yet been executed: returning the method to step b) in order to obtain this other variant, and then reiterating step c) or step d) or e) for this other variant, or alternately
- if step c) has already been executed for each of the variants that belong to the list of N variants, interrupting the processing of the access control message received in step a).
